(19) Europäisches Patentamt
European Patent Office
Office européen des brevets

(11) Veröffentlichungsnummer : **0 340 256 B1**

# (12) EUROPÄISCHE PATENTSCHRIFT

(45) Veröffentlichungstag der Patentschrift :
**15.04.92 Patentblatt 92/16**

(51) Int. Cl.$^5$ : **B60T 13/14,** F15B 3/00

(21) Anmeldenummer : **88908199.8**

(22) Anmeldetag : **13.09.88**

(86) Internationale Anmeldenummer :
**PCT/EP88/00836**

(87) Internationale Veröffentlichungsnummer :
**WO 89/03334 20.04.89 Gazette 89/09**

## (54) EINRICHTUNG ZUR ANPASSUNG DER KENNLINIE EINES HYDROSPEICHERS AN DIE KENNLINIE EINES VERBRAUCHERS.

(30) Priorität : **17.10.87 DE 3735236**

(43) Veröffentlichungstag der Anmeldung :
**08.11.89 Patentblatt 89/45**

(45) Bekanntmachung des Hinweises auf die Patenterteilung :
**15.04.92 Patentblatt 92/16**

(84) Benannte Vertragsstaaten :
**DE FR GB**

(56) Entgegenhaltungen :
**DE-A- 3 024 930**
**DE-A- 3 444 828**
**DE-C- 0 261 719**
**GB-A- 0 973 792**

(73) Patentinhaber : **ALFRED TEVES GMBH**
**Guerickestrasse 7**
**W-6000 Frankfurt/Main 90 (DE)**

(72) Erfinder : **KLEIN, Hans-Christof**
**Hofheimer Strasse 22**
**W-6234 Hattersheim (DE)**

(74) Vertreter : **Grau, Ulf**
**c/o ALFRED TEVES GMBH Guerickestrasse 7**
**W-6000 Frankfurt (M) 90 (DE)**

**EP 0 340 256 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Einrichtung zur Anpassung der Lade- bzw. Entladekennlinie eines Hydrospeichers an die Kraft-Weg-Kennlinie eines Verbrauchers.

Bremsanlagen moderner Fahrzeuge weisen heute sehr häufig hydraulische Bremskraftverstärker auf, die mit einer Druckquelle, bestehend aus Speicher und Pumpe, ausgerüstet sind. Die Pumpe wird zum Laden dens Speichers benötigt. Bei dem Speicher kann es sich z.B. um einen Kolbenspeicher oder einen Blasenspeicher handeln. Weiterhin ist ein pedalbetätigtes Bremsventil vorgesehen, mit dessen Hilfe Druckmittel aus dem Druckspeicher in einen Verstärkerraum eingesteuert wird. Der Druck im Verstärkerraum entwickelt sich im allgemeinen fußkraftproportional und verschiebt einen Verstärkerkolben, der auf einen Hauptzylinder einwirkt.

Zum Lösen der Bremse wird der Verstärkerraum an einen drucklosen Vorratsbehälter angeschlossen, so daß das darin enthaltene Druckmittel abfließen kann. Nach oder schon während der Bremsung wird der Speicher neu geladen, wozu ein bestimmter Energiebetrag benötigt wird. Bei jeder Bremsung geht somit ein gewisser Energiebetrag zur Betätigung des Verstärkers verloren.

Bei einer bremsschlupfgeregelten Anlage ist der Energieverlust besonders groß. Im Stand der Technik sind z.B. schlupfgeregelte Bremsanlagen beschrieben, bei denen zur Druckentlastung der Radbremszylinder der Hauptbremszylinder in seine Grundposition gebracht wird. Das Umsteuern des Verstärkers erfolgt zyklisch bzw. nach den Vorgaben von Steuersignalen, die von einer Bremsschlupfsteuereinrichtung erzeugt werden. Jedes Umsteuern des Verstärkers bedeutet aber einen Energieverlust, da sowohl zum Zurückfahren des Verstärkers, also zur Druckentlastung des Hauptbremszylinders, als auch zum erneuten Druckaufbau Druckmittel aus dem Speicher entnommen wird. Dies ist z.B. bei der Bremsanlage gemäß der DE-OS 34 44 828 der Fall.

Weiterhin haben derartige Speicher den Nachteil, daß sie in gefülltem Zustand unter einem hohen Druck stehen und daß bei Druckmittelentnahme der Speicherdruck sinkt. Die Kennlinie eines Verbrauchers kann aber gerade umgekehrt sein. Dies ist z.B. bei Bremsanlagen der Fall. Je mehr Druckmittel in den hydraulischen Verstärker eingesteuert wird, desto stärker wächst der Druck an. Der Speicher muß daher gerade so ausgelegt sein, daß bei einem maximal druckbeaufschlagten Hauptbremszylinder der nahezu entleerte Speicher noch genügend Druck zur Verfügung stellt, um einen entsprechenden Druck im Hauptbremszylinder erzeugen zu können. Der Speicherdruck bei vollem Speicher muß daher entsprechend höher liegen, so daß zum Füllen des Speichers gegen hohe Drücke gearbeitet werden muß. Dies bedeutet aber nichts anderes, als daß zum Laden des Speichers sehr viel Energie benötigt wird.

Die Erfindung beruht daher auf der Aufgabe, die Energieaufnahme einer hydraulischen Anlage, insbesondere einer Bremsanlage, deutlich zu verringern. Es wird daher vorgeschlagen, eine Einrichtung zur Anpassung der Lade bzw. Entladekennlinie eines Hydrospeichers an die Kraftwegkennlinie eines Verbrauchers einzusetzen, die dadurch charakterisiert ist, daß der Hydrospeicher mit einem Geberzylinder und der Verbraucher mit einem Nehmerzylinder in Verbindung steht, daß zwischen den Kolben von Geber- und Nehmerzylinder ein Getriebe angeordnet ist, und daß sich die Übersetzung des Getriebes in Abhängigkeit von den Positionen der Kolben ändert.

Wenn auch die Problematik anhand einer Bremsanlage beschrieben worden ist, so läßt sich doch eine derartige Einrichtung bei allen energetisch, zyklisch ablaufenden wiederholten Betätigungsvorgängen einsetzen.

Eine besonders kompakte und günstige Ausgestaltung eines derartigen Getriebes kann durch ein Doppelhebelrollkurvengetriebe realisiert werden.

Ein derartiges Getriebe ist in aller Ausführlichkeit in einer zum Anmeldezeitpunkt .noch nicht veröffentlichten Anmeldung der Anmelderin beschrieben worden (P 37 18 944). Es besteht aus zwei Hebeln, die drehbar gelagert sind. Die Hebel sind über eine Rolle aneinander abgestützt, wobei die Rolle auf Rollkurven abläuft, die an den Flanken der Hebel ausgbildet sind. Die Flanken der Hebel lassen sich nach mathematischen Gesetzmäßigkeiten formen, wodurch erreicht wird, daß in jeder Position der Hebel die Rolle einer definierten Position zwischen den Hebeln einnimmt. Je nachdem, welche Position die Rolle innehat, liegt ein anderes Hebelverhältnis zwischen den an den Hebeln angreifenden Kräften vor, so daß erreicht werden kann, daß die angreifenden Kräfte stets im Gleichgewicht stehen.

Es reichen daher geringe zusätzliche Steuerkräfte aus, um den Verbraucher zu betätigen.

Die Anordnung ermöglicht es auch, nach Betätigung des Verbrauchers die dort gespeicherte elastische Energie in den Speicher zurückzuführen. Es findet somit ein energetisches Wechselspiel zwischen Verbraucher und Speicher statt, so daß der Speicher nach einem Betätigunsvorgang nicht erneut unter Einsatz weiterer Energie geladen werden muß.

Der Erfindungsgedanke soll anhand eines Beispiels noch einmal verdeutlicht werden. Zur Erläuterung des Beispiels wird auf zwei Figuren zurückgegriffen, wobei die

Fig. 1 den Hydrospeicher 1 mit dem zugehöriger. Getriebe 12 zeigt und

Fig. 2 die prinzipielle Anordnung in einer hydraulischen Bremsanlage.

Zunächst wird auf die Fig. 1 bezug genommen. Mit 1 ist ein Hydrospeicher bezeichnet, der aus einem Speichergehäuse 2 und einer damit angeordneten elastischen Trennwand 3 (Membran) gebildet ist. Es handelt sich somit um einen Blasenspeicher. Die Membran 3 trennt das Speichergehäuse in einen Gasraum 4 und einen Druckmittelraum 5. Der Druckmittelraum 5 geht in eien Zylinder 6 über, der von einem Kolben 7 begrenzt ist. Über einen Stift 8 wirkt der Kolben 7 über das noch zu beschreibende Doppelhebelrollkurvengetriebe ein.

Auf der anderen Seite des Getriebes 12 befindet sich ein Nehmerzylinder 9 mit einem Nehmerkolben 10, der ebenfalls über einen Stift 11 mit dem Doppelhebelrollkurvengetiebe 12 zusammenarbeitet

Das Doppelhebelrollkurvengetriebe (RHG) besteht aus zwei Hebeln I,II, die in den ortsfesten Punkten 13,14 drehbar gelagert sind. Die Flanken der Hebel 16,17 sind einander zugewandt und stützen sich jeweils an einer Rolle 15 ab. Die Flanken 16,17 sind als Rollkurven ausgebildet, so daß sich, je nach Lage der Hebel, bezogen auf ihre Drehpunkte 13,14, eine andere Lage der Rolle 15, bezogen auf die Flanken 16,17, ergibt. Die "richtige" Lage der Rolle 15 ist dadurch gekennzeichnet, daß die Tangente im Berührpunkt Rolle 15, Flanke 16 bzw. Rolle 15, Flanke 17 senkrecht zu der Verbindungslinie Berührpunkt/Mittelpunkt der Rolle verläuft.

Die Druckkräfte auf den Nehmerkolben 7 greifen über einen konstanten Hebelarm am Hebel II an und die Kräfte auf den Nehmerkolben 10 über einen ebenfalls konstanten Hebelarm am Hebel I an. Da sich aber, je nach Lage der Rolle 15 das Hebelverhältnis zwischen den Hebeln I und II ändert, ändert sich auch das Ubersetzungsverhältnis zwischen den Druckkräften auf den Nehmerkolben 7 und auf den Geberkolben 10.

In der Fig. 1 ist der Hydrospeicher auf einem niedrigen Druckniveau dargestellt. Dem Gas im Gasraum 4 ist ein relativ großes Volumen zur Verfügung gestellt, so daß gemäß den Zustandsgleichungen dieses Gases ein niedriger Druck folgt. Dieser Druck ist auf dem Diagramm $S_{II}$, $P_{II}$ auf der Achse $P_{II}$ dargestellt. Wird der Nehmerkolben in der Darstellung gemäß der Fig. 1 nach oben geschoben, so bleibt das Volumen des Zylinders 6 und des Flüssigkeitsraums 5 konstant, da das Druckmittel im wesentlichen inkompressibel ist. Das Gas im Gasraum 4 wird zusammengedrückt, wodurch sich, entsprechend den Zustandsgleichungen dieses Gases, der Druck erhöht. Dies wird mit der Kurve 19 im Diagramm $S_{II}$, $P_{II}$ dargestellt.

Gerade umgekehrt sind die Verhältnisse am Nehmerzylinder. In der dargestellten Position der Fig. 1 ist das Druckmittel im Nehmerzylinder 9 weitgehend zum Verbraucher geleitet worden, wodurch der Verbraucher gegen eine wachsende Gegenkraft arbeitet. Entsprechend hoch ist der Druck im Verbraucher- bzw. im Nehmerzylinder 9. Bewegt sich der Nehmerkolben 10 in der Darstellung gemäß der Fig. 1 nach oben, so wird dem Verbraucher Druckmittel entnommen, wodurch die Gegenkraft des betätigten Organs geringer wird. Entsprechend sinkt der Druck im Verbraucher.

Der größer werdende Druck auf den Geberkolben 7 und der geringer werdende Druck auf den Nehmerkolben 9 bleiben trotzdem im Gleichgewicht, da die Hebel I,II um ihre Lagerpunkte 13,14 schwenken und so die Rolle 15 entlang der Flanken 16,17 wandert. Das Übersetzungsverhältnis ändert sich, und zwar derart, daß stets das gewünschte Kraftgleichgewicht hergestellt ist.

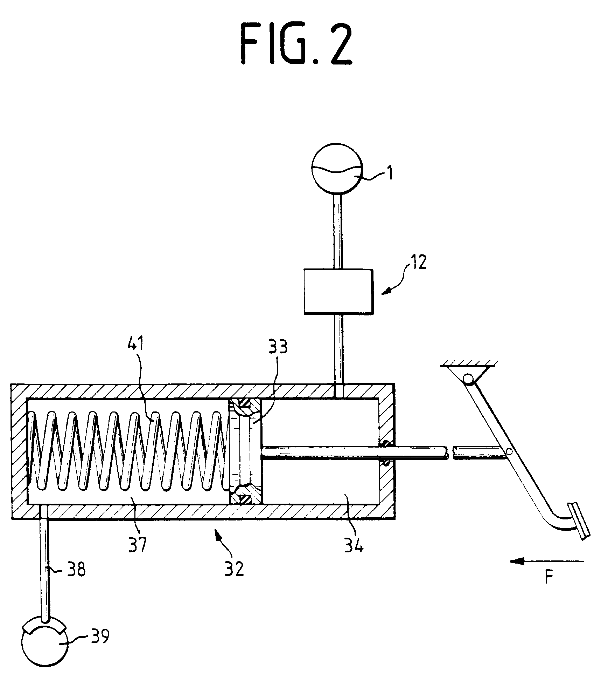

Die Funktionsweise wird noch stärker verdeutlicht, wenn man sich die stark schematisierte Darstellung einer Bremsanlage in der Fig. 2 vor Augen hält. Der Speicher 1 steht über Geber- und Nehmerzylinder 6,9 und dem Rollhebelgetriebe 12 mit dem Druckraum 34 in Verbindung. Der Druck im Druckraum 34 belastet einen Arbeitskolben 33, der bei Druckbelastung gemäß der Darstellung der Fig. 2 nach links verschoben wird und das Druckmittel im Arbeitsraum 37 komprimiert. Der sich dort aufbauende Druck wird über die Bremsleitung 38 zu einem Radbremszylinder 39 geführt.

Wenn die Bremsanlage unter Druck gesetzt wird, also in den Radbremsen 39 Druck aufgebaut wird, erfolgt gleichzeitig eine Speicherung von Energie. Letztlich kann man nämlich das System Bremsdruckgeber 32/Bremsleitung 38/Radbremszylinder 39 als ein elastisches System verstehen, da durch Aufweitung des Bremsdruckgebergehäuses der Bremsleitung 38 sowie des Bremssattels eine elastische Rückstellkraft entsteht. Die Rückstellkraft bestimmt letztlich den Druck im Bremsdruckgeber 32. Je weiter der Kolben 33 in der Darstellung gemäß der Fig. 2 nach links geschoben wird, d.h. je größer die Volumenaufnahme des Raues 34

artig zyklisch ablaufenden Vorgängen interessant ist. Z.B. treten bei Verstärkern, die mittels pedalbetätigter Ventile geregelt werden, hohe Energieverluste auf, da Druckmittel durch die Ventile strömt, wobei hohe Druckunterschiede bestehen, nämlich auf der einen Seite der Speicherdruck, auf der anderen Seite der Verstärkerdruck, der zumindestens in der Anfangsphase sehr klein ist. Das hohe Druckgefälle bedeutet gleichzeitig hohe Drosselverluste. Wenn aber an das Ventil nicht direkt der Speicher- , sondern der Nehmerzylinder 9 gemäß der Fig. 1 angeschlossen ist, so kann das Getriebe so eingerichtet werden, daß der Druck im Geberzylinder 9 nur wenig über dem Druck im Verstärkerraum liegt, so daß die Drosselverluste gering gehalten werden können.

Bezugszeichenliste

| | |
|---|---|
| 1 | Hydrospeicher |
| 2 | Speichergehäuse |
| 3 | elastische Trennwand, Membran |
| 4 | Gasraum |
| 5 | Druckmittelraum |
| 6 | Geberzylinder |
| 7 | Geberkolben |
| 8 | Stift |
| 9 | Nehmerzylinder |
| 10 | Nehmerkolben |
| 11 | Stift |
| 12 | Doppelhebel-Rollkurvengetriebe (RHG) |
| 13 | ortsfester Lagerpunkt |
| 14 | ortsfester Lagerpunkt |
| 15 | Rolle |
| 16,17 | Rollkurven |
| 18,19 | Diagrammkurven |
| 32 | Bremsdruckgeber |
| 33 | Kolben |
| 34 | Druckraum |
| 37 | Arbeitsraum |
| 38 | Bremsleitung |
| 39 | Radbremszylinder |
| 41 | Rückstellfeder |

## Patentansprüche

1. Einrichtung zur Anpassung der Lade- bzw. Entladekennlinie eines Hydrospeichers (1) an die Kraft-Weg-Kennlinie eines Verbrauchers (32) dadurch **gekennzeichnet**, daß der Hydrospeicher (1) mit einem Geberzylinder (6) und der Verbraucher mit einem Nehmerzylinder (9) in Verbindung steht, daß zwischen den Kolben (7,10) von Geber- und Nehmerzylinder (6,9) ein Getriebe (12) angeordnet ist, und daß sich die Übersetzung des Getriebes in Abhängigkeit von den Positionen der Kolben (7,10) ändert.

2. Einrichtung nach Anspruch 1, dadurch **gekennzeichnet**, daß in jeder Position der Kolben (7,10) die von den Kolben (7,10) auf das Getriebe (12) übertragenen Kräfte im Gleichgewicht stehen.

3. Einrichtung nach Anspruch 2, dadurch **gekennzeichnet**, daß das Getriebe durch einen Doppelhebel-Rollkurvengetriebe (RHG) (12) realisiert ist.

4. Einrichtung nach Anspruch 3, dadurch **gekennzeichnet**, daß das RHG aus zwei Hebeln I,II besteht, die in Lagerpunkten (13,14) drehbar gelagert sind, und die sich gegenseitig an einer Rolle (15) abstützen.

5. Einrichtung nach Anspruch 4, dadurch **gekennzeichnet**, daß die der Rolle (15) zugewandten Seiten (16,17) der Hebel konkav ausgebildet sind, wobei die konkaven Seiten derart berechnet sind, daß die Rolle (15) in jeder Position der Hebel I,II eine definierte Lage einnimmt.

6. Einrichtung nach den vorhergehenden Ansprüchen, dadurch **gekennzeichnet**, daß der Verbraucher mit einer zusätzlichen Steuerkraft F beaufschlagbar ist.

## Claims

1. A device for adapting the charging or discharging characteristic curve of a hydraulic accumulator to the force-to-travel characteristic curve of a consumer (32), **characterized** in that the hydraulic accumulator (1) communicates with a master cylinder (6) and in that the consumer communicates with a slave cylinder (9); in that a transmission mechanism (12) is arranged between the pistons (7, 10) of the master and slave cylinders (6, 9); and in that the transmission ratio of the transmission mechanism varies in dependence on the positions of the pistons (7, 10).

2. A device as claimed in claim 1, **characterized** in that the forces transmitted by the pistons (7, 10) onto the transmission mechanism (12) are balanced in any position of the pistons (7, 10).

3. A device as claimed in claim 2, **characterized** in that the transmission mechanism is realized by a double-lever roulette transmission mechanism (roller-and-lever-type transmission mechanism) (12).

4. A device as claimed in claim 3, **characterized** in that the roller-and-lever-type transmission mechanism consists of two levers I, II rotatably supported on points of support (13, 14) and supporting each other on a roller (15).

5. A device as claimed in claim 4, **characterized** in that the levers sides (16, 17) facing the roller (15) have a concave design, with the concave sides being calculated such as to ensure that the roller (15) adopts a defined position in any position of the levers I, II.

6. A device as claimed in the preceding claims, **characterized** in that an additional control force F can be applied to the consumer.

## Revendications

1. Dispositif permettant l'adaptation de la caractéristique de remplissage ou de vidage d'un accumulateur hydraulique (1) à la caractéristique force/course d'un utilisateur (32), caractérisé en ce que l'accumulateur hydraulique (1) communique avec un cylindre émetteur (6) et l'utilisateur avec un cylindre récepteur (9), en ce qu'un mécanisme à rapport de transmission variable (12) est disposé entre les pistons (7, 10) du cylindre émetteur (6) et du cylindre récepteur (9) et en ce que le rapport de transmission de ce mécanisme varie en fonction des positions des pistons (7, 10).

2. Dispositif suivant la revendication 1, caractérisé en ce que, dans chaque position des pistons (7, 10), les forces transmises par ces derniers au mécanisme à rapport de transmission variable (12) sont en équilibre.

3. Dispositif suivant la revendication 2, caractérisé en ce que le mécanisme à rapport de transmission variable est réalisé sous la forme d'un mécanisme à rapport de transmission variable (12) à double levier et surface de came de rouleau (MLR).

4. Dispositif suivant la revendication 3, caractérisé en ce que le MLR est constitué de deux leviers (I, II) qui sont montés rotatifs en des points de pivotement (13, 14) et qui prennent appui dans des sens opposés sur un rouleau (15).

5. Dispositif suivant la revendication 4, caractérisé en ce que les côtés (16, 17) des leviers qui sont tournés vers le rouleau (15) ont une forme concave, ces côtés concaves étant calculés de telle façon que, dans chaque position des leviers (I, II), le rouleau (15) occupe une position définie.

6. Dispositif suivant les revendications précédentes, caractérisé en ce que l'utilisateur est soumis à l'action d'un effort supplémentaire de commande (F).

FIG.1

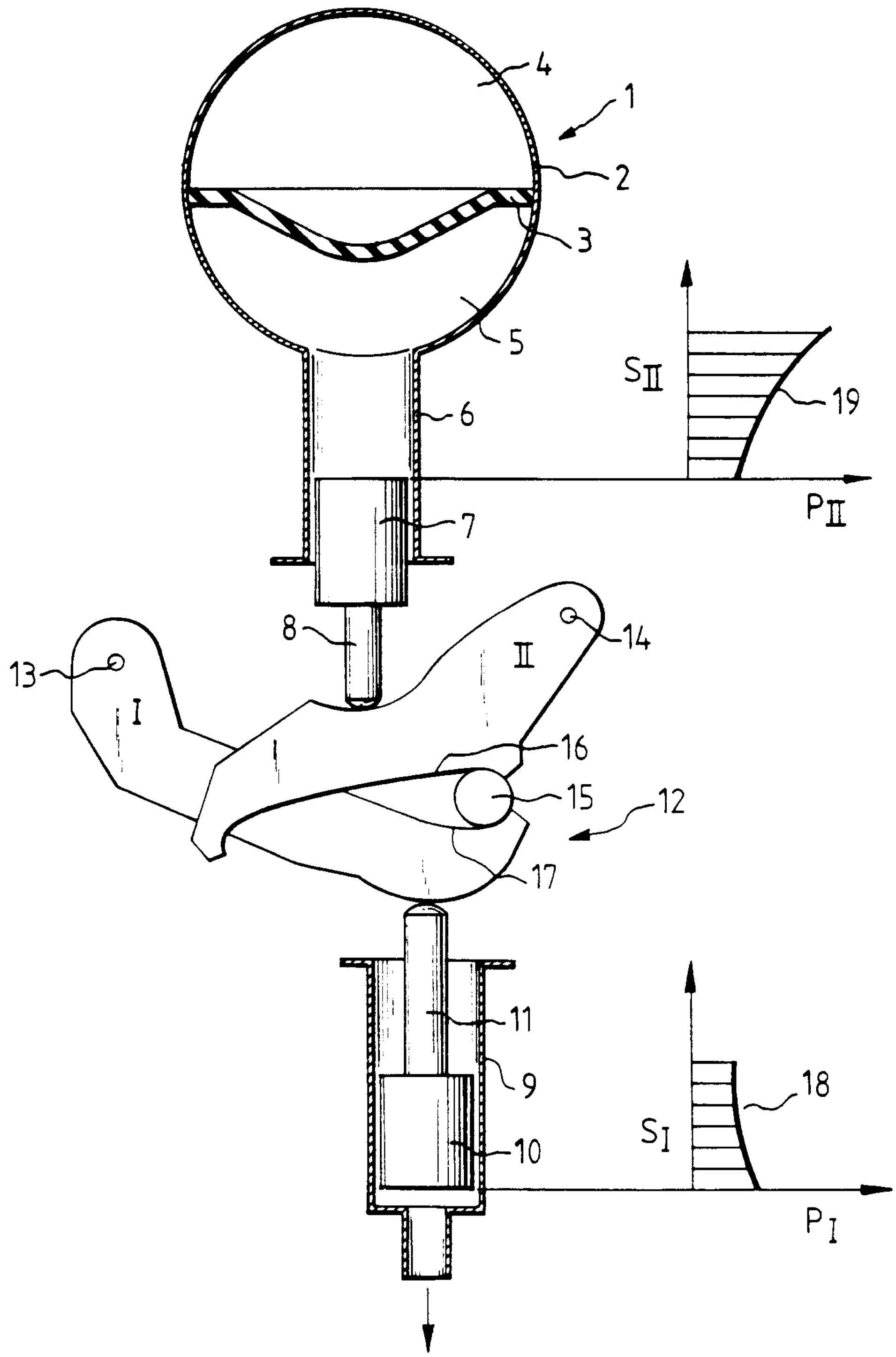

FIG. 2